# EUROPÄISCHE PATENTSCHRIFT

(11) **EP 2 911 141 B1**
(45) Veröffentlichungstag und Bekanntmachung des Hinweises auf die Patenterteilung: **08.09.2021**
(21) Anmeldenummer: 15000221.0
(22) Anmeldetag: 26.01.2015
(51) Int. Cl.: G09F 13/04, F21S 9/02, F21V 8/00, G08B 7/06, G09F 13/18, G09F 13/22

(54) **Leuchte**
Lamp
Éclairage

(30) Priorität: 19.02.2014 DE 102014203036
(43) Veröffentlichungstag der Anmeldung: 26.08.2015
(73) Patentinhaber: Eaton Intelligent Power Limited, 4 Dublin (IE)
(72) Erfinder: Rotgeri, Gerhard, 59590 Geseke (DE)
(74) Vertreter: Grünecker Patent- und Rechtsanwälte PartG mbB

(56) Entgegenhaltungen:
- WO-A1-2013/083869
- WO-A2-2008/111024
- DE-U1-202008 014 775
- US-A1- 2009 219 734

## Beschreibung

Die Erfindung betrifft eine Leuchte und insbesondere eine Sicherheits- oder Rettungszeichenleuchte. Eine solche Leuchte dient zur Kennzeichnung eines Fluchtwegs aus beispielsweise einem Gebäude und weist wenigstens ein Leuchtmittel, eine Lichtverteilplatte, ein Piktogramm mit Primärsymbol und ein Leuchtengehäuse auf. Das Leuchtmittel ist beispielsweise einer Lichteintrittskante der Lichtverteilplatte zugeordnet, welche zumindest eine Lichtaustrittsfläche zur im Wesentlichen gleichmäßigen Ausleuchtung des Piktogramms beziehungsweise Primärsymbols aufweist.

Eine solche Leuchte ist aus der DE 20 2008 014 775 bekannt.

Die Leuchte erfüllt eine Reihe von elektrotechnischen, baurechtlichen und lichttechnischen Vorschriften und ist in der Regel Teil einer Sicherheitsbeleuchtungsanlage. Durch solche Leuchten soll primär ein gefahrloses Verlassen von Gebäuden ermöglicht werden, indem das Piktogramm mit entsprechendem Primärsymbol eine Richtung eines Fluchtweges anzeigt. Die Leuchten können einen Überwachungsbaustein aufweisen, der beispielsweise die aktuelle Funktion der Leuchte an eine zentrale Steuereinrichtung meldet, oder einen Datenaustausch mit dieser ermöglicht. Dabei kann jede einzelne Leuchte mit einer individuellen Adresse versehen sein, um die Leuchte gezielt von der zentralen Steuereinrichtung ansprechen zu können.

Jede der entsprechenden Leuchten beziehungsweise auch Gruppen von Leuchten werden dynamisch geschaltet, um gegebenenfalls einen Fluchtweg je nach Erfordernis zu ändern. Dazu war es bisher erforderlich, dass beispielsweise eine zweite Leuchte oder Anzeige vorgesehen ist, die eine andere Fluchtwegrichtung anzeigen kann. Je nach Erfordernis wird dann eine der beiden Leuchten wirksam geschaltet. Dazu muss allerdings jede der Leuchten separat angesteuert werden und entsprechend zur Fluchtwegsteuerung ein- oder ausgeschaltet werden. Außerdem ist aus der Praxis eine Lösung bekannt, bei der neben der entsprechenden Leuchte mit dem Piktogramm eine weitere Leuchte mit einem anderen Symbol angeordnet ist, das beispielsweise anzeigt, ob die entsprechende Fluchtwegrichtung gilt oder nicht beachtet werden sollte. D. h., ein Betrachter muss zwei unterschiedliche Leuchten beachten und den Zusammenhang zwischen den Leuchten erkennen, um einem entsprechenden Fluchtweg folgen zu können.

WO2013/083869A1 zeigt eine Leuchte in Form einer Sicherheits- oder Rettungszeichenleuchte. Primärleuchtmittel werden in Form einer LED-Leiste verwendet. Die Leuchte weist ein Piktogramm auf, dass mit einem entsprechenden. Symbol ausgebildet ist. Es besteht weiterhin die Möglichkeit, dass ein Sekundärsymbol und ebenso Sekundärleuchtmittel eingesetzt werden. Dazu wird eine transparente Platte mit einer Struktur verwendet, die auf der vom Piktogramm wegweisenden Seitenfläche der transparenten Symbolplatte ausgebildet ist.

Der Erfindung liegt die Aufgabe zugrunde, eine Leuchte der eingangs genannten Art dahingehend zu verbessern, dass mit einfachen Mitteln eindeutig feststellbar ist, ob eine entsprechende Leuchte noch für eine Fluchtwegkennzeichnung zu beachten ist oder nicht. Gleichzeitig soll die Leuchte allen Erfordernissen entsprechender Vorschriften im Bereich der Sicherheitsbeleuchtung genügen.

Diese Aufgabe wird erfindungsgemäß durch die Merkmale des Patentanspruchs 1 gelöst. Die Erfindung zeichnet sich insbesondere dadurch aus, dass eine im Wesentlichen transparente Symbolplatte ein Sekundärsymbol aufweist, welches durch zumindest ein einer Lichteintrittskante der Symbolplatte zugeordnetes Sekundärleuchtmittel durch dessen Ein- und Ausschalten jeweils sichtbar beziehungsweise im Wesentlichen unsichtbar dem Primärsymbol überlagert ist. D. h., die entsprechende Symbolplatte ist Teil der Leuchte und weist ein Leuchtmittel auf, siehe Sekundärleuchtmittel, das entsprechend ein- und ausschaltbar ist. Ist das Sekundärleuchtmittel ausgeschaltet, ist über Lichtverteilplatte und Piktogramm das entsprechende Primärsymbol sichtbar, wenn das Primärleuchtmittel eingeschaltet ist. Wird allerdings das Sekundärleuchtmittel eingeschaltet, wird das Sekundärsymbol dem Primärsymbol überlagert und es wird beispielsweise durch das Sekundärsymbol ausgesagt, dass das Primärsymbol ungültig ist. Dadurch ist keine separate Anzeige neben der eigentlichen Leuchte erforderlich, da Symbolplatte, Sekundärleuchtmittel und alle weiteren elektronischen und elektrischen Teile zur Steuerung beispielsweise des Sekundärleuchtmittels in der Leuchte enthalten sind.

Durch das Primärleuchtmittel soll insbesondere ein gleichmäßiges Ausleuchten des Piktogramms beziehungsweise Primärsymbols erzielt werden. Dazu sind unterschiedliche Möglichkeiten denkbar. Beispielsweise können dem Primärleuchtmittel entsprechende Reflektionseinrichtungen im Inneren des Leuchtengehäuses zugeordnet sein, die eine entsprechende Lichtverteilung zum gleichmäßigen Ausleuchten des Piktogramms/Primärsymbols ermöglichen. Bei einem weiteren Ausführungsbeispiel ist es außerdem denkbar, dass die Leuchte weiterhin eine Lichtverteilplatte aufweist. Auf einer Rückseite der Lichtverteilplatte, d. h. auf der vom Primärsymbol abgewandten Seite der Lichtverteilplatte, kann das entsprechende Primärleuchtmittel angeordnet sein. Weiterhin besteht die Möglichkeit, dass das Primärleuchtmittel insbesondere einer Lichteintrittskante einer Lichtverteilplatte zugeordnet ist. Durch die Lichtverteilplatte erfolgt ein entsprechendes, im Wesentlichen gleichmäßiges Ausleuchten des Primärsymbols über eine entsprechende Lichtaustrittsfläche der Lichtverteilplatte. In diesem Zusammenhang besteht weiterhin die Möglichkeit, dass die Symbolplatte in Lichtaustrittsrichtung der Lichtaustrittsfläche der Lichtverteilplatte oder insbesondere bei Fehlen einer Lichtverteilplatte dem Primärsymbol nachgeordnet ist.

Zur Erhöhung des Kontrasts von Primärsymbol relativ zum Sekundärsymbol ist es von Vorteil, wenn die Symbolplatte separat zum Piktogramm ausgebildet ist. D. h., die entsprechende Beleuchtung des Piktogramms erfolgt über die Lichtverteilplatte, während die Symbolplatte separat zu Piktogramm- und Lichtverteilplatte angeordnet ist und mittels des Sekundärleuchtmittels entsprechend wirksam oder unwirksam durch Ein- und Ausschalten des Sekundärleuchtmittels geschaltet wird.

Das Piktogramm ist in Form einer Piktogrammplatte zwischen Lichtverteilplatte und Symbolplatte angeordnet. Alternativ kann die Symbolplatte auch zwischen Lichtverteilplatte und Piktogrammplatte angeordnet sein.

Erfindungsgemäß ist die Symbolplatte mit Sekundärleuchtmittel bei Leuchten einsetzbar, die beispielsweise ein entsprechendes Leuchtmittel in Form von einer Leuchtstoffröhre oder anderen Leuchtmitteln aufweist. Dabei wird in der Regel die Lichtverteilplatte von einer Rückseite her beleuchtet und auf deren Vorderseite ist das Piktogramm angeordnet oder die entsprechende Piktogrammplatte vorgeordnet. Ebenfalls besteht die Möglichkeit, dass das Leuchtmittel als LED-Streifen oder LED-Leiste ausgebildet ist, wobei insbesondere LED-Platinenstreifen oder -leisten verwendet werden, die entlang der entsprechenden Lichteintrittskante anordbar sind. Solche Leuchten zeichnen sich generell durch eine sehr kompakte und schmale Bauweise aus, wobei gleichzeitig das entsprechende Piktogramm gut ausgeleuchtet und erkennbar ist.

Um die Leuchte in einfacher Weise durch ein Gehäuse ebenfalls von schmaler und kompakter Bauweise realisieren zu können, kann es weiterhin von Vorteil sein, wenn Symbolplatte und/oder Piktogrammplatte und/oder Lichtverteilplatte gleiche Abmessungen aufweisen, zumindest hinsichtlich Breite und Höhe, und/oder sandwichartig aufeinander angeordnet sind.

Es ist denkbar, dass das Sekundärleuchtmittel Teil des Primärleuchtmittels ist, sodass beispielsweise je nach Erfordernis nur ein Teil des Primärleuchtmittels zum Beleuchten des Piktogramms benötigt wird, während ein anderer Teil des Primärleuchtmittels, nämlich das Sekundärleuchtmittel, ausgeschaltet ist. Erst bei Anschalten dieses Sekundärleuchtmittels erfolgt dann ebenfalls ein Beleuchten des Sekundärsymbols und damit eine entsprechende Überlagerung des Primärsymbols und eine entsprechende Aufhebung des Primärsymbols durch das Sekundärsymbol.

Es ist ebenfalls denkbar, dass das Primärsymbol durch das Sekundärsymbol variiert wird oder bei Einschalten des Sekundärleuchtmittels das Primärleuchtmittel zumindest teilweise oder auch vollständig ausgeschaltet wird.

Zur Vereinfachung der Ansteuerung der Beleuchtung ist es allerdings in der Regel als günstig zu betrachten, wenn das Sekundärleuchtmittel separat zu dem Primärleuchtmittel ausgebildet ist.

Weiterhin wird die Beeinflussung der verschiedenen Leuchtmittel dadurch reduziert, wenn beispielsweise Sekundärleuchtmittel und Primärleuchtmittel an senkrecht zueinander angeordneten Lichteintrittskanten von jeweils Lichtverteilplatte und Symbolplatte angeordnet sind. D. h., das Primärleuchtmittel erstreckt sich beispielsweise entlang einer längeren Kante der Lichtverteilplatte, während das Sekundärleuchtmittel entlang einer kürzeren Kante der Symbolplatte angeordnet ist.

In diesem Zusammenhang und zur verbesserten Ausleuchtung des Sekundärsymbols ist es weiterhin als günstig zu betrachten, wenn gegebenenfalls die Sekundärleuchtmittel an zwei einander gegenüberliegenden Lichteintrittskanten der Symbolplatte angeordnet sind.

Dadurch wird das Sekundärsymbol besser ausgeleuchtet und ist besser relativ zum Primärsymbol beziehungsweise Piktogramm sichtbar.

Um mittels des Sekundärleuchtmittels das entsprechende Sekundärsymbol deutlich hervorheben zu können, ist es weiterhin in der Regel günstig, wenn das Sekundärsymbol durch Mikro- oder Nanostrukturen, Streupartikel, Ätzstrukturen, Einkerbungen, Oberflächenbearbeitung, wie Sandstrahlen oder dergleichen bestimmt ist. Im Bereich dieser entsprechenden Strukturen findet dann keine Totalreflektion des über die Lichteintrittskante eintretenden Lichts des Sekundärleuchtmittels mehr statt, sondern es erfolgt eine Streuung und/oder Reflektion in Richtung des Betrachters und damit ein Anzeigen des Sekundärsymbols.

Es wurde bereits darauf hingewiesen, dass das Sekundärsymbol in unterschiedlicher Weise aufgebaut sein kann. Beispielsweise kann es eine Ergänzung des Primärsymbols darstellen, um dieses in seiner Aussage zu ändern, d. h. beispielsweise eine andere Fluchtwegrichtung vorzugeben. Es ist ebenfalls möglich, dass das Sekundärsymbol im Wesentlichen X-förmig ausgebildet ist und bei seiner Beleuchtung dem Piktogramm so überlagert ist, dass dieses als unwirksam erkannt wird. Ein solches Sekundärsymbol von X-Form kann beispielsweise dadurch realisiert werden, dass dieses zumindest zwei Paare von sich kreuzförmig schneidenden Linien aufweist. Ebenso ist denkbar, dass zwei sich X-förmig schneidende Streifen auf der Sekundärplatte strukturiert sind, die bei entsprechendem Einschalten des Sekundärleuchtmittels relativ zum Piktogramm beziehungsweise Primärsymbol sichtbar sind. Die entsprechende Strukturierung kann in einer Oberfläche der Symbolplatte vorgesehen sein, wobei diese Oberfläche vorteilhafterweise direkt an der Piktogrammplatte anliegt. Dadurch ist einerseits sicher gestellt, dass das Sekundärsymbol bei ausgeschaltetem Sekundärleuchtmittel im Wesentlichen vollständig unsichtbar ist, während es bei eingeschaltetem Sekundärleuchtmittel gut relativ zum Piktogramm/Primärsymbol sichtbar ist.

Ein Piktogramm zur Fluchtwegsteuerung weist häufig nur die Farben weiß und grün auf. Um in diesem Zusammenhang das Sekundärsymbol deutlich hervorheben zu können, kann es weiterhin von Vorteil sein, wenn das Sekundärleuchtmittel eine andere Lichtfarbe als das Primärleuchtmittel und/oder das Piktogramm aufweist. Bei den oben verwendeten Farben für das Piktogramm ist die Lichtfarbe des Primärleuchtmittels in der Regel weiß. Um in diesem Zusammenhang sowohl relativ zur Lichtfarbe des Primärleuchtmittels als auch zu den Farben des Piktogramms das Sekundärsymbol gut hervorheben zu können, ist die Lichtfarbe des Sekundärleuchtmittels beispielsweise rot.

Andere unterschiedliche Lichtfarben sind selbstverständlich möglich.

Um gegebenenfalls die Symbolplatte mit Sekundärleuchtmittel bei einer bereits vorhandenen Leuchte nachrüsten zu können, kann die Symbolplatte mit dem Sekundärleuchtmittel als Einbaumodul ausgebildet sein. Diese ist relativ dünn ausgebildet und wird einfach dem bereits vorhandenen Piktogramm oder der entsprechenden Piktogrammplatte vorgeordnet. Es erfolgt ein entsprechender Anschluss des Sekundärleuchtmittels mit in der Leuchte bereits vorhandenem Steuergerät, sodass die Leuchte beispielsweise von einer zentralen Steuereinrichtung auch zum Betätigen des Sekundärmittels ansteuerbar ist. Die bereits vorhandene Adresse der Leuchte kann weiterhin verwendet werden.

Es wurde bereits darauf hingewiesen, dass das Sekundärsymbol auf einer dem Piktogramm zuweisenden Seitenfläche der Symbolplatte ausgebildet ist, um nahezu unsichtbar dem Piktogramm zugeordnet werden zu können.

Es sind ebenfalls Leuchten mit Piktogrammen bekannt, bei denen ein solches Piktogramm beidseitig zur Lichtverteilplatte mit entsprechendem Leuchtmittel angeordnet ist. D. h., das Piktogramm ist aus beiden Blickrichtungen auf die Leuchte und die entsprechenden Lichtaustrittsflächen der Lichtverteilplatte sichtbar. Um in diesem Zusammenhang entsprechende Sekundärsymbole beiden Seiten der Leuchte zuordnen zu können, können Piktogramm und Symbolplatte beidseitig zur Lichtverteilplatte angeordnet sein. In diesem Zusammenhang ist in der Regel eine Lichtverteilplatte zur ausreichenden Beleuchtung der beidseitig angeordneten Piktogramme oder Piktogrammplatten ausreichend. D. h., nur bei der einen Lichtverteilplatte ist das Primärleuchtmittel angeordnet. Da die Symbolplatten zweimal angeordnet sind, weisen diese in der Regel jeweils eigene Sekundärleuchtmittel auf.

Um die entsprechenden Teile der Leuchte in einfacher Weise in einem Leuchtengehäuse anordnen zu können, kann das Leuchtengehäuse eine Rückwand und zumindest einen mit dieser lösbar befestigten Vorderrahmen aufweisen. Die Rückwand kann geschlossen sein, wodurch sich eine Leuchte mit einseitig angeordnetem und sichtbarem Primär- beziehungsweise Sekundärsymbol ergibt. Bei einer beidseitig verwendbaren Leuchte ist ebenfalls die Rückwand in Art eines umlaufenden Rahmens ausgebildet, der wiederum mit dem Vorderrahmen lösbar verbindbar ist.

Die entsprechenden Rahmen beziehungsweise Vorderrahmen mit Rückwand umgeben insbesondere Lichtverteilplatte, Piktogrammplatte und Symbolplatte entlang deren Ränder, sodass beispielsweise die Leuchtmittel an den Lichteintrittskanten von dem Gehäuse abgedeckt sind, während allerdings Primär- und Sekundärsymbol vollständig und gut sichtbar freigelassen werden.

Im Folgenden wird ein vorteilhaftes Ausführungsbeispiel der Erfindung anhand der in der Zeichnung beigefügten Figuren näher erläutert.

Es zeigen:
- Figur 1: eine perspektivische Vorderansicht eines Ausführungsbeispiels einer erfindungsgemäßen Leuchte und
- Figur 2: eine auseinandergezogene Darstellung der Leuchte nach Figur 1.

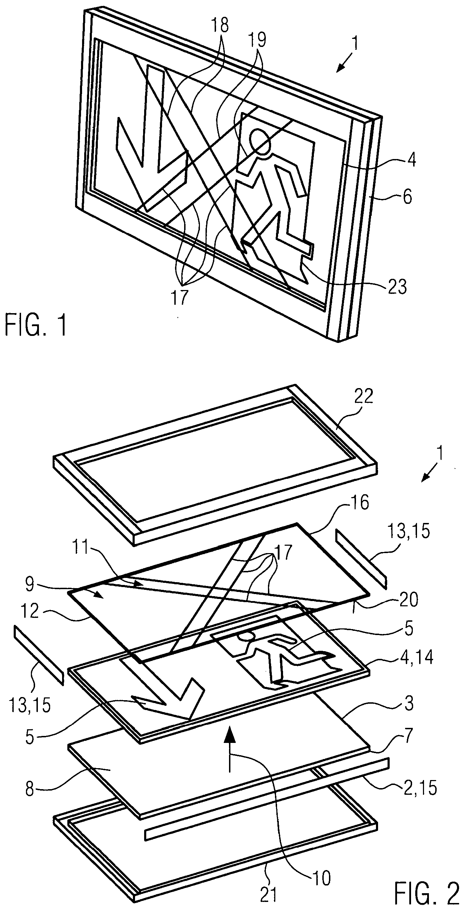

Figur 1 zeigt eine perspektivische Ansicht von schräg vorne auf eine Vorderseite einer erfindungsgemäßen Leuchte, insbesondere Sicherheits- oder Rettungszeichenleuchte 1. Diese weist ein Leuchtengehäuse 6 auf, das vorzugsweise aus einer geschlossenen Rückwand 21 und einem umlaufenden Vorderrahmen 22 gebildet ist, siehe auch Figur 2. Das Leuchtengehäuse 6 beinhaltet die entsprechende Leuchtenelektronik sowie ein Primärleuchtmittel 2, eine Lichtverteilplatte 3, ein Piktogramm 4 und eine Symbolplatte 9. Diese sind insbesondere in Figur 2 dargestellt. Die Symbolplatte 9 weist separate Sekundärleuchtmittel 13 auf, die entlang von entsprechenden Lichteintrittskanten 12, 16 angeordnet sind. Symbolplatte 9 mit Sekundärleuchtmitteln 13 kann als Einbaumodul 23 ausgebildet sein. Ein solches Einbaumodul kann bei bereits vorhandenen Leuchten 1 zusätzlich innerhalb des Leuchtengehäuses 6 angeordnet werden oder auch gegen ein anderes Einbaumodul 23 ausgetauscht werden.

In Figur 1 weist das Piktogramm 4 ein Primärsymbol 5 auf, welches einen in Figur 1 nach unten gerichteten weißen Pfeil und eine in Figur 1 im rechten Teil des Piktogramms 4 angeordnete, laufende Figur umfasst. Das Primärsymbol 5 dient zur Kennzeichnung einer Fluchtwegrichtung innerhalb eines Gebäudes oder dergleichen.

Entsprechende Einrichtungen zur Befestigung der Leuchte 1 nach Figur 1, beispielsweise oberhalb einer Tür, an einer Wand, an einer Decke oder dergleichen sind zur Vereinfachung nicht dargestellt, ebenso wenig wie Versorgungsleitungen, Datenleitungen oder dergleichen. Es besteht dabei die Möglichkeit, dass Versorgungsleitungen und Datenleitungen in einer Leitung integriert sind, sodass beispielsweise Daten über die Versorgungsleitungen übermittelt werden können durch entsprechende Modulation der Versorgungsspannung oder Aufmodulierung von Daten auf die Versorgungsspannung.

Eine Leuchte 1 nach Figur 1 weist in der Regel eine eindeutige Adresse auf, mittels der diese von einer zentralen Steuereinrichtung ansteuerbar und überprüfbar ist. Außerdem ist ein Datenaustausch mit der zentralen Steuereinrichtung möglich.

In Figur 2 ist die Leuchte nach Figur 1 in einer auseinandergezogenen Darstellung sichtbar. Das Leuchtengehäuse 6 weist die entsprechend geschlossene Rückwand 21 und den Vorderrahmen 22 auf, der lösbar mit der Rückwand 21 verbindbar ist. Der Vorderrahmen 22 ist ein umlaufender Rahmen, der insbesondere entsprechende Kanten von Lichtverteilplatte, Piktogramm und Symbolplatte überdeckt und entlang diesen verläuft.

Die Symbolplatte 9 ist aus einem transparenten Material hergestellt und wird dem Piktogramm 4 in Lichtaustrittsrichtung 10 nachgeordnet. D. h., die Symbolplatte 9 ist zwischen Piktogramm 4 und einem Betrachter angeordnet. Bei dem dargestellten Ausführungsbeispiel ist das Piktogramm 4 in Form einer Piktogrammplatte 14 vorgesehen, d. h. als separates Bauteil zu beispielsweise Lichtverteilplatte 3 beziehungsweise Symbolplatte 9. Es besteht ebenfalls die Möglichkeit, dass das Piktogramm 4 Teil der Lichtverteilplatte 3 beziehungsweise der Symbolplatte 9 ist.

Lichtverteilplatte 3, Piktogrammplatte 14 und Symbolplatte 9 sind im Wesentlichen mit gleichen Abmessungen ausgebildet, d. h. weisen gleiche Breite und Höhe auf. Dadurch sind diese sicher, insbesondere im Vorderrahmen 22, aufgenommen und von diesem umrandet. Weiterhin weist die Symbolplatte 9 auf einer ihrer Seitenflächen 20 ein Sekundärsymbol 11 auf. Bevorzugt kann ein solches Sekundärsymbol 11 auf der der Piktogrammplatte 14 zuweisenden Seitenfläche 20 der Symbolplatte 9 angeordnet sein. Bei dem dargestellten Ausführungsbeispiel ist das Sekundärsymbol durch zwei Streifen 18, 19 gebildet, die sich X-förmig schneiden. Dies ist ebenfalls in Figur 1 erkennbar, siehe dort die Streifen 18 und 19.

Um ein entsprechendes Sekundärsymbol zu bilden, weist die Symbolplatte 9 eine Strukturierung 17 in Form von Mikro-, Nanostrukturierung, Streupartikeln, Ätzstrukturen, Einkerbungen, Oberflächenstrukturen oder dergleichen auf. Diese verhindern eine Totalreflektion im Inneren der Symbolplatte und führen zu einem gezielten Lenken des Lichts in Richtung eines Betrachters durch Reflektion, Streuung und dergleichen. Die Streupartikel können beispielsweise zur Strukturierung in der Oberfläche der Symbolplatte 9 angeordnet sein. Entsprechende Oberflächenstrukturen können durch Prismen, Mikrolinsen oder dergleichen gebildet sein. Durch ein Ätzen können entsprechende Vertiefungen in Form des Sekundärsymbols in der Oberfläche der Symbolplatte 9 ausgebildet sein.

Die Symbolplatte 9 weist seitliche und einander gegenüberliegende Lichteintrittskanten 12, 16 auf, wobei entlang dieser das Sekundärleuchtmittel in Form von zwei LED-Streifen oder -Leisten 15 angeordnet ist. Ein solcher LED-Streifen /-Leiste kann als LED-Platinenstreifen /-leiste ausgebildet sein.

Es sei an dieser Stelle angemerkt, dass selbstverständlich andere Sekundärsymbole 11 möglich sind und auch eine X-förmige Form des Sekundärsymbols 11 nicht nur durch zwei Streifen 18, 19, sondern ebenfalls durch zwei entsprechende Linienpaare gebildet sein kann, die sich X-förmig schneiden.

Außerdem sind andere Sekundärsymbole 11 möglich, wie beispielsweise mehrere solcher X-Formen auf einer Symbolplatte oder auch andere Sekundärsymbole, die beispielsweise mit dem Primärsymbol auf der Piktogrammplatte 14 ein neues Symbol bilden.

Die Lichtverteilplatte 3 ist im Wesentlichen eine transparente Platte, wobei diese eine untere und lange Lichteintrittskante 7 aufweist, an der ebenfalls ein LED-Streifen /-Leiste 15 als Primärleuchtmittel 2 angeordnet ist. Die Lichtverteilplatte 3 weist eine entsprechende Strukturierung auf, damit eine dem Piktogramm beziehungsweise der Piktogrammplatte 14 zugeordnete Lichtaustrittsfläche 8 das Piktogramm gleichmäßig beleuchtet.

Die Primär- und Sekundärleuchtmittel können gleichartig aufgebaut sein und weisen teilweise nur eine andere Länge auf. Außerdem sind diese beim dargestellten Ausführungsbeispiel separat angeordnet und insbesondere separat ansteuerbar.

Weiterhin sei noch angemerkt, dass anstatt einer geschlossenen Rückwand 21 ein Hinterrahmen analog zum Vorderrahmen 22 möglich ist, wodurch beispielsweise eine von beiden Seiten zu betrachtende Leuchte gebildet wird. Dazu wird ebenfalls auf der anderen Seite der Lichtverteilplatte 3 ein entsprechendes Piktogramm beziehungsweise eine Piktogrammplatte 14 und eine Symbolplatte 9 angeordnet. Diese zweite Symbolplatte 9 weist ebenfalls entsprechende Sekundärleuchtmittel auf.

Erfindungsgemäß ergibt sich eine Leuchte, insbesondere Sicherheits- oder Rettungszeichenleuchte, mit einem Sekundärsymbol, das bei entsprechendem Einschalten des Sekundärleuchtmittels dem Piktogramm der Leuchte überlagert ist. Dabei kann das Piktogramm durch die Primärleuchtmittel beleuchtet werden, wobei es ebenfalls denkbar ist, dass bei eingeschaltetem Sekundärleuchtmittel das Primärleuchtmittel ausgeschaltet ist.

Durch das Sekundärsymbol wird das Primärsymbol in seiner Fluchtwegleitung aufgehoben beziehungsweise verändert, wobei bei dem dargestellten Ausführungsbeispiel der Erfindung für einen Betrachter in einfacher Weise erkennbar ist, dass die durch das Piktogramm angezeigte Fluchtwegrichtung nicht mehr gültig ist.

Dadurch ergibt sich in einfacher und für den Betrachter sicherer Weise eine dynamische Fluchtwegführung, ohne dass zusätzlich Einrichtungen neben der Leuchte verwendet werden müssen. Die bereits in der Leuchte vorhandene Elektronik oder Spannungsversorgung wird ebenfalls für die Sekundärleuchtmittel eingesetzt. Dies gilt auch für die der Leuchte zugeordnete Adresse, die von einer zentralen Steuereinrichtung sowohl zur üblichen Steuerung der Leuchte als auch zur Betätigung der Sekundärleuchtmittel verwendet werden kann.

Bei einigen Leuchten kann es sich allerdings als vorteilhaft erweisen, wenn zumindest für eine Zentralelektronik der Leuchte ein separates Gehäuse vorhanden ist, das am entsprechenden Leuchtengehäuse anbringbar oder mit diesem zumindest elektrisch verbindbar ist. In dieser Zentralelektronik können die entsprechenden Einrichtungen zur Kommunikation mit der zentralen Steuereinrichtung, Spannungsversorgung und dergleichen angeordnet sein. Bei an der Decke angeordneten Leuchte ist es in diesem Zusammenhang insbesondere von Vorteil, wenn eine solche Zentralelektronik mit eigenem Gehäuse beispielsweise in der Decke unsichtbar angeordnet ist. Dabei sind beispielsweise nur die LED-Leuchtmittel innerhalb der Leuchte angeordnet, sodass diese insgesamt sehr schlank und kompakt ausgestaltet ist.

## Patentansprüche

1. Sicherheits- und Rettungszeichenleuchte (1), mit wenigstens einem Primärleuchtmittel (2), einem Piktogramm (4) in Form einer Piktogrammplatte (14) mit Primärsymbol (5) und einem Leuchtengehäuse (6), wobei das Primärleuchtmittel (2) zur gleichmäßigen Ausleuchtung des Primärsymbols (5) angeordnet ist, wobei die Sicherheits- und Rettungszeichenleuchte eine transparente Symbolplatte (9) mit einem Sekundärsymbol (11) aufweist, welches durch zumindest ein einer Lichteintrittskante (12, 16) der Symbolplatte zugeordnetes Sekundärleuchtmittel (13) durch dessen Ein- und Ausschalten jeweils sichtbar bzw. unsichtbar dem Primärsymbol (5) überlagert ist, wobei das Sekundärsymbol (11) durch eine Oberflächenbearbeitung und/oder Strukturierung einer der Piktogrammplatte (14) zuweisenden Seitenfläche (20) der Symbolplatte ausgebildet ist, welche
in Lichtaustrittsrichtung (10) dem Primärsymbol (5) nachgeordnet ist, wobei die Symbolplatte (9) separat zur Piktogrammplatte (14) ausgebildet ist und die Leuchte weiterhin eine Lichtverteilplatte (3) aufweist und das Primärleuchtmittel (2) einer Lichteintrittskante (7) der Lichtverteilplatte (3) zugeordnet ist, welche Lichtverteilplatte (3) zumindest eine Lichtaustrittsfläche (8) zur gleichmäßigen Ausleuchtung des Primärsymbols (5) aufweist, wobei
die Piktogrammplatte (14) zwischen Lichtverteilplatte (3) und Symbolplatte (9) angeordnet ist.

2. Leuchte nach Anspruch 1, **dadurch gekennzeichnet, dass** jedes Leuchtmittel (2, 13) als LED-Platinenstreifen oder -leiste ausgebildet ist.

3. Leuchte nach Anspruch 1 oder 2, **dadurch gekennzeichnet, dass** Symbolplatte (9) und/oder Piktogrammplatte (14) und/oder Lichtverteilplatte (3) gleiche Abmessungen aufweisen und/oder sandwichartig aufeinander angeordnet sind.

4. Leuchte nach einem der vorangehenden Ansprüche, **dadurch gekennzeichnet, dass** das Sekundärleuchtmittel (13) separat zum Primärleuchtmittel (2) ausgebildet ist.

5. Leuchte nach einem der vorangehenden Ansprüche, **dadurch gekennzeichnet, dass** Sekundärleuchtmittel (13) und Primärleuchtmittel (2) an senkrecht zueinander angeordneten Lichteintrittskanten (7, 12, 16) von jeweils Lichtverteilplatte (3) und Symbolplatte (9) angeordnet sind.

6. Leuchte nach einem der vorangehenden Ansprüche, **dadurch gekennzeichnet, dass** das Sekundärleuchtmittel (13) an zwei einander gegenüberliegenden Lichteintrittskanten (12, 16) der Symbolplatte (9) angeordnet ist.

7. Leuchte nach einem der vorangehenden Ansprüche, **dadurch gekennzeichnet, dass** das Sekundärsymbol (11) durch Mikro- oder Nanostrukturen, Streupartikel, Ätzstrukturen, Einkerbungen, Oberflächenstrukturen oder dergleichen bestimmt ist.

8. Leuchte nach einem der vorangehenden Ansprüche, **dadurch gekennzeichnet, dass** das Sekundärsymbol (11) zumindest zwei einander kreuzförmig schneidende Streifen (18, 19) aufweist.

9. Leuchte nach einem der vorangehenden Ansprüche, **dadurch gekennzeichnet, dass** das Sekundärleuchtmittel (13) eine andere Lichtfarbe als das Primärleuchtmittel (2) und/oder das Piktogramm mit Primärsymbol aufweist.

10. Leuchte nach einem der vorangehenden Ansprüche, **dadurch gekennzeichnet, dass** die Symbolplatte (9) mit Sekundärleuchtmittel (13) als Einbaumodul (23) ausgebildet ist.

11. Leuchte nach einem der vorangehenden Ansprüche, **dadurch gekennzeichnet, dass** jeweils eine Piktogrammplatte (14) und eine Symbolplatte (9) beidseitig zur Lichtverteilplatte (3) angeordnet sind

12. Leuchte nach einem der vorangehenden Ansprüche, **dadurch gekennzeichnet, dass** das Leuchtengehäuse (6) eine Rückwand (21) und einen lösbar mit dieser befestigbaren Vorderrahmen (22) aufweist.

## Claims

1. Safety and emergency sign lamp (1) with at least a primary illuminant (2), a pictogram (4) in the form of a pictogram plate (14) with a primary symbol (5) and a lamp housing (6), wherein the primary illuminant (2) is arranged for a uniform illumination of the primary symbol (5), wherein the safety and emergency sign lamp comprises a transparent symbol plate (9) with a secondary symbol (11), which is visibly or non-visibly superposed the primary symbol (5) by at least one secondary illuminant (13) assigned to a light entry edge (12, 16) of the symbol plate by switching on and switching off the secondary illuminant, wherein the secondary symbol (11) is formed by a surface processing and/or structuring of a lateral surface (20) of the symbol plate directed to the pictogram plate (14), which symbol plate is arranged downstream of the primary symbol (5) in the light exit direction (10), wherein the symbol plate (9) is separately constructed to the pictogram plate (14) and wherein the lamp further comprises a light distribution plate (3) and the primary illuminant (2) is assigned to a light entry edge (7) of the light distribution plate (3), which light distribution plate (3) has at least one light exit surface (8) for uniform illumination of the primary symbol (5) and wherein the pictogram plate (14) is arranged between the light distribution plate (3) and the symbol plate (9).

2. Lamp according to claim 1, **characterized in that** each illuminant (2, 13) is provided as an LED-printed strip or -printed band.

3. Lamp according to claim 1 or 2, **characterized in that** the symbol plate (9) and/or the pictogram plate (14) and/or the light distribution plate (3) have the same dimensions and/or are arranged sandwiched one upon the other.

4. Lamp according to one of the previous claims, **characterized in that** the secondary illuminant (13) is provided separately from the primary illuminant (2).

5. Lamp according to one of the previous claims, **characterized in that** the secondary illuminant (13) and the primary illuminant (2) are arranged at light entry edges (7, 12, 16) arranged perpendicularly to each other of light distribution plate (3) and symbol plate (9), respectively.

6. Lamp according to one of the previous claims, **characterized in that** the secondary illuminant (13) is arranged at two light entry edges (12, 16) of the symbol plate (9) arranged opposite to each other.

7. Lamp according to one of the previous claims, **characterized in that** the secondary symbol (11) is defined by micro or nano structures, diffusion particles, etched structures, indentations, surface structures or the like.

8. Lamp according to one of the previous claims, **characterized in that** the secondary symbol (11) comprises two strips (18, 19) arranged cross-wise to each other.

9. Lamp according to one of the previous claims, **characterized in that** the secondary illuminant (13) has a light color different to the light color of the primary illuminant (2) and/or the pictogram.

10. Lamp according to one of the previous claims, **characterized in that** the symbol plate (9) with the secondary illuminant (13) is provided as an installation module (23).

11. Lamp according to one of the previous claims, **characterized in that** one pictogram plate (14) and one symbol plate (9) are arranged on both sides of the light distribution plate (3).

12. Lamp according to one of the previous claims, **characterized in that** the lamp housing (6) has a back wall (21) and a front frame (22) detachably connected to the back wall (21).

## Revendications

1. Signal lumineux de sécurité et d'évacuation (1) avec au moins un moyen d'éclairage primaire (2), un pictogramme (4) sous forme d'une plaque de pictogramme (14) avec un symbole primaire (5) et un boîtier de luminaire (6),
dans lequel le moyen d'éclairage primaire (2) est agencé pour un éclairage uniforme du symbole primaire (5),
dans lequel le signal lumineux de sécurité et d'évacuation comporte une plaque de symbole transparente (9) avec un symbole secondaire (11), sur lequel est superposé au moins un moyen d'éclairage secondaire (13), associé à un côté d'entrée de lumière (12, 16) de la plaque de symbole, dont l'allumage et l'extinction rend respectivement le symbole primaire (5) visible et invisible, dans lequel le symbole secondaire (11) est réalisé par un traitement de surface et/ou une structuration d'une surface latérale (20) de la plaque de symbole, orientée vers la plaque de pictogramme (14), qui est placée après le symbole primaire (5) en direction de sortie de la lumière (10),
dans lequel la plaque de symbole (9) est réalisée séparément de la plaque de pictogramme (14), le luminaire comporte en outre une plaque de diffusion de lumière (3), et le moyen d'éclairage primaire (2) est associé à un côté d'entrée de lumière (7) de la plaque de diffusion de lumière (3), ladite plaque de diffusion de lumière (3) comportant au moins une surface de sortie de lumière (8) pour un éclairage uniforme du symbole primaire (5),
dans lequel la plaque de pictogramme (14) est agencée entre la plaque de diffusion de lumière (3) et la plaque de symbole (9).

2. Luminaire selon la revendication 1, **caractérisé en ce que** chaque moyen d'éclairage (2, 13) est constitué comme une plaque à bandes ou à barres de diodes électroluminescentes DEL.

3. Luminaire selon la revendication 1 ou 2, **caractérisé en ce que** la plaque de symbole (9) et/ou la plaque de pictogramme (14) et/ou la plaque de diffusion de lumière (3) présentent les mêmes dimensions et/ou sont agencées l'une sur l'autre en alternance.

4. Luminaire selon l'une des revendications précédentes, **caractérisé en ce que** le moyen d'éclairage secondaire (13) est constitué de manière séparée du moyen d'éclairage primaire (2).

5. Luminaire selon l'une des revendications précédentes, **caractérisé en ce que** le moyen d'éclairage secondaire (13) et le moyen d'éclairage primaire (2) sont agencés sur des côtés d'entrée de lumière perpendiculaires entre eux (7, 12, 16) respectivement de la plaque de diffusion de lumière (3) et de la plaque de symbole (9).

6. Luminaire selon l'une des revendications précédentes, **caractérisé en ce que** le moyen d'éclairage secondaire (13) est agencé sur deux côtés d'entrée de lumière opposés (12, 16) de la plaque de symbole (9).

7. Luminaire selon l'une des revendications précédentes, **caractérisé en ce que** le symbole secondaire (11) est défini par des microstructures ou nanostructures, des particules dispersées, des structures gravées, des indentations, des structures de surface ou des solutions similaires.

8. Luminaire selon l'une des revendications précédentes, **caractérisé en ce que** le symbole secondaire (11) comporte au moins deux bandes (18, 19) qui s'entrecoupent en forme de croix.

9. Luminaire selon l'une des revendications précédentes, **caractérisé en ce que** le moyen d'éclairage secondaire (13) présente une autre couleur que le moyen d'éclairage primaire (2) et/ou que le pictogramme avec le symbole primaire.

10. Luminaire selon l'une des revendications précédentes, **caractérisé en ce que** la plaque de symbole (9) est constituée avec un moyen d'éclairage secondaire (13) sous forme d'un module intégré (23).

11. Luminaire selon l'une des revendications précédentes, **caractérisé en ce qu'**une plaque de pictogramme (14) et une plaque de symbole (9) sont agencées de part et d'autre de la plaque de diffusion de lumière (3).

12. Luminaire selon l'une des revendications précédentes, **caractérisé en ce que** le boîtier du luminaire (6) comporte une paroi arrière (21) et un châssis avant (22) attachable qui est détachable de celle-ci.
